# EUROPEAN PATENT SPECIFICATION

(11) **EP 1 219 403 B1**
(45) Date of publication and mention of the grant of the patent: **28.04.2004**
(21) Application number: 01128815.6
(22) Date of filing: 04.12.2001
(51) Int. Cl.: B29C 45/50

(54) **Improved injection assembly for injection presses for plastic materials**
Verbesserte Spritzgiessanordnung für Spritzgiesspressen für Kunststoffe
Dispositif d'injection amélioré pour presses d'injection pour matières plastiques

(30) Priority: 28.12.2000 IT MI002835
(43) Date of publication of application: 03.07.2002
(73) Proprietor: NEGRI BOSSI S.P.A., I-20093 Cologno Monzese (Milano) (IT)
(72) Inventor: Meschia, Maurilio, 20040 Usmate (Milano) (IT)
(74) Representative: Petruzziello, Aldo

(56) References cited:
- WO-A-97/18938
- DE-A- 19 652 564

## Description

This invention concerns an improved injection assembly for injection presses for plastic materials.

According to the prior art, in an injection moulding process, presses and devices for injection moulding are used in which resins, composed of plastics, are heated to be brought to the molten state in a heating cylinder and are injected, at high pressure, into a cavity of a mould so as to fill the mould. The molten resin is cooled in the mould so that it hardens and forms the moulded product. At this point the mould is opened and the moulded product is extracted, which may then be stored or proceed to further processing phases.

The injection moulding device comprises a moulding assembly and an injection assembly. The moulding assembly generally comprises two half-moulds mounted respectively on a fixed plate and on a mobile plate, so that the mould may be opened and closed by moving the mobile plate backwards and forwards.

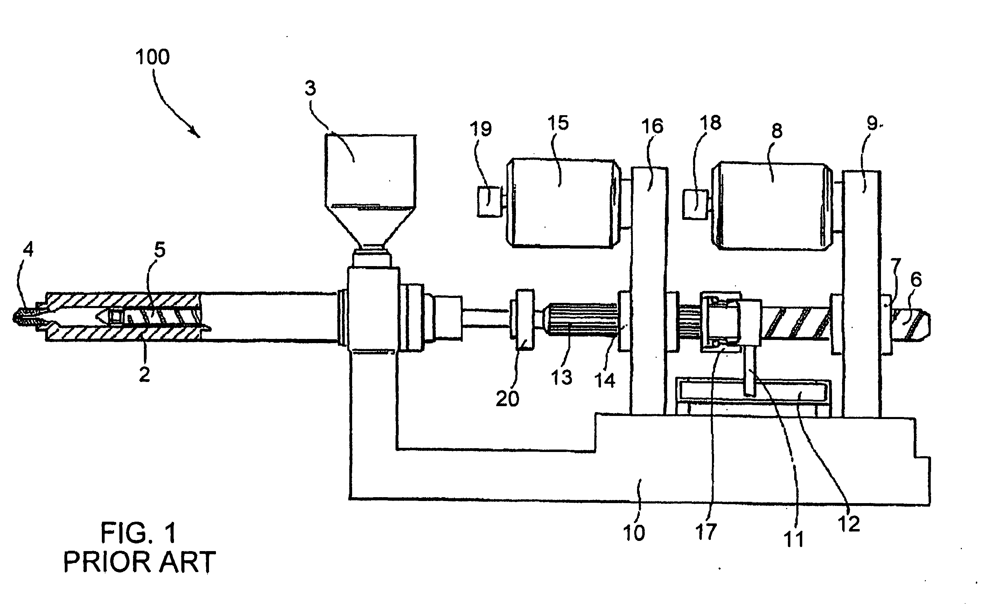

Fig. 1 schematically shows a prior art injection assembly, indicated as a whole with the reference number 100. The injection assembly 100 comprises a heating cylinder 2 for bringing to a molten state the resins fed through a hopper 3, and an injection nozzle 4 for injecting the molten material into the cavity in the mould. Inside the heating cylinder 2 is a plasticating or plasticator screw 5 which must perform a rotary movement around its own axis to plasticate the resins and a forward travelling movement to inject the molten material and a retracting movement to admit of the resins from the hopper 3.

The plasticating screw 5 is moved by means of a system of electric motors. For the travelling movement of the plasticating screw 5 a screw and nut screw system is provided, in which a screw 6 engages in a nut screw 7. The nut screw 7 is driven by a motor 8 by means of a reduction unit 9 fixed to a machine chassis or frame 10. The screw 6 is prevented from rotating around its own axis by means of an anti-rotation device. This anti-rotation device comprises a rod 11 fixed to the screw 6 and a stop block 12 fixed to the machine chassis 10. In this way the rod 11, abutting against the stopping block 12, prevents rotation of the screw 6, allowing only travelling movement. Accordingly, by turning the electric motor in one direction or in the opposite direction, forward or backward movement of the screw 6 is allowed which brings the plasticating screw 5 with it.

As for the rotary movement of the plasticating screw 5, this is obtained by means of a spline shaft 13, connected by means of a coupling 20 to the plasticating screw 5. The spline shaft 13 engages in a sliding bush 14 turned by an electric motor 15 by means of a reduction unit 16 fixed to the machine chassis 10. The spline shaft 13 is disengaged from the screw 6 by means of an assembly of bearings 17, so that the rotary movement of the plasticating screw 5 can be independent of the travelling movement.

The electric motors 8 and 15 are equipped respectively with encoder type sensors 18 and 19 to perform the speed adjustments required in the various phases of the work cycle.

The injection assembly 100, according to the prior art described above, has a drawback, due to the fact that each electric motor 8 or 15 is dedicated either to the travelling phase or to the rotating phase of the plasticating screw 5. Therefore the power to be installed for each motor is equal to the maximum power required for the phase with which it is associated. Consequently, during the travelling phase of the plasticating screw 5, there will be an overload of the motor 8, while the motor 15 remains inactive; on the other hand, during the rotating phase of the plasticating screw 5 there will be an overload of the motor 15, while the motor 8 remains inactive. This leads to an excessive waste of energy and rapid wear of the motors, which practically always work at maximum power.

WO 97/18938 discloses a drive apparatus for an injection unit, in which the feed screw, in the plastication and injection phase, is driven by a ball screw and by a drive motor. However, three one-way clutches are provided: the first between the feed screw and the frame, the second between the drive motor and the feed screw, and the third between the drive motor and the ball screw. Such a solution makes the drive apparatus complex in construction.

The aim of the invention is to eliminate these problems, providing an improved injection assembly for injection presses for plastic materials which has a simple construction and is practical, economic, versatile and simple to make.

This aim is achieved according to the invention with the characteristics listed in the annexed independent claim 1.

Further characteristics of the invention appear in the dependent claims.

The electric injection assembly for injection presses for plastic materials according to the invention has a plasticating or plasticator screw connected to a movement screw.

The movement screw is preferably a ball screw and it is rotated by a main motor coupled to it and mounted on a support that slides horizontally on the machine chassis to perform the travelling movement of the movement screw.

A nut screw, engaged with the movement screw, is fitted on the machine chassis with bearings and is rotated by an auxiliary motor. The nut screw can rotate only in the direction of rotation for the plasticating screw, in the opposite direction it is blocked by an anti-rotation system.

The coupling between the movement screw and the plasicating screw is provided by a first coupling integral with the plasticating screw and a second coupling integral with movement screw. A thrust bearing and a free wheel or one-way clutch are interposed between the two couplings, the one-way clutch allowing the rotation only in the plastication direction.

The pure travelling movement of the plasticating screw for the injection phase is obtained by blocking the nut screw and operating the main motor which, by rotating the movement screw, gives the forward movement.

In the plastication phase, in which the plasticating screw must turn while moving back gradually, the direction of rotation of the main motor is inverted. Therefore the one-way clutch is engaged and it allows the movement screw to be integral in rotation with the plasticating screw. The nut screw is moved by the auxiliary electric motor by means of a reduction gear which only controls correct reverse movement of the plasticating screw.

This system has various advantages with respect to the known systems. In fact, the injection assembly according to the invention provides an operating mechanism based principally on the use of only one electric power drive composed of the main motor coupled directly to the movement screw. The main motor is of a suitable size to be able to perform both the injection phase and the plasticating phase without a heavy reduction stage.

The control of the productive process is also very simple because it relies only on the main motor for injection, while for plastication the back pressure is controlled on the auxiliary motor.

Furthermore, the connection between the movement screw and the plasticating screw is very simple and effective, since it does not provide any complex construction due to presence of more one-way clutches, as in the injection units according to the prior art.

Further characteristics of the invention will be more clear from the detailed description below, referring to unrestrictive exemplary embodiments thereof, illustrated in the annexed drawings, in which:
Fig. 1 is a schematic part-sectional elevational view, illustrating a prior art injection assembly;
Fig. 2 is a view, as in Fig. 1, illustrating a first embodiment of an injection assembly according to the invention;
Fig. 3 is a view, as in Fig. 1, illustrating a second embodiment of an injection assembly according to the invention.

With the aid of the Figures, an injection assembly for injection presses for plastic materials according to the invention is described.

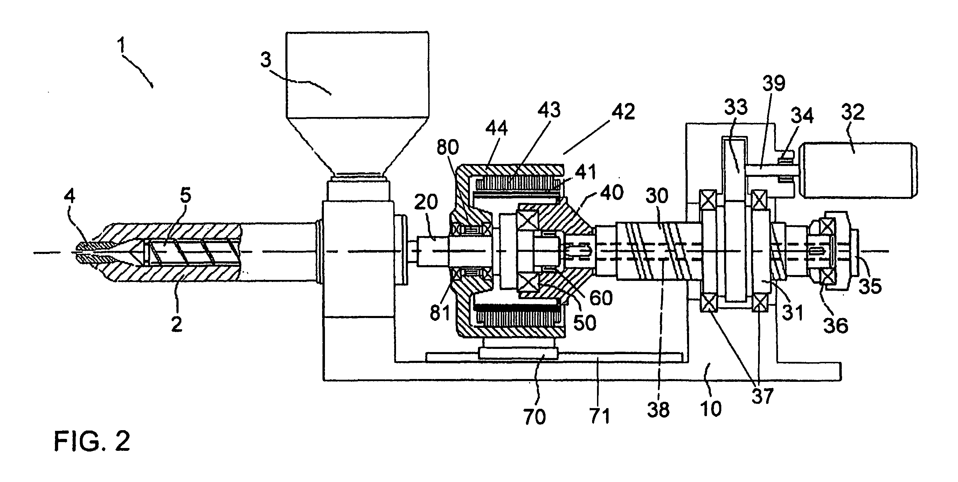

Fig. 2 schematically shows a first embodiment of an injection assembly according to the invention, indicated as a whole with the reference number 1. Elements which are the same as or corresponding to those already illustrated in Fig. 1 (concerning the prior art plasticating assembly 100) are indicated with the same reference numbers.

In the plasticating assembly 1 according to the invention, a plasticating or plasticator screw 5 is connected by means of a first coupling 20 and a second coupling 40 to a movement screw 30. The first coupling 20 is integral with the plasticating screw 5 and the second coupling 40 is integral with the movement screw 30. Between the first coupling 20 and the second coupling 40, a thrust bearing 50 and a free wheel 60 are fitted. The free wheel 60 acts as an anti-rotation system, that is it allows a relative rotation of the second coupling 40 with respect to the first coupling 20 in one direction and not in the opposite direction.

The movement screw 30 is connected by means of a second coupling 40 to a main electric motor 42. In particular, the second coupling 40 is integrally fixed to rotor 41 of the main electric motor 42. A stator 43 of the main electric motor is fixed to a casing 44 supported by a profiled guide 70 which slides on a track 71 integral with the machine chassis 10. Between the casing 44 and the first coupling 20 are fitted thrust bearings 81 and a free wheel 80 which acts as an anti-rotation system.

A threaded part of the movement screw 30 engages in a respective nut screw 31 driven by an auxiliary electric motor 32 by means of a reduction unit 33. The nut screw 31 is supported, by means of bearings 37, by the machine chassis 10. Between the shaft 39 of the auxiliary motor 32 and the machine chassis 10, a free wheel 34 is interposed which acts as an anti-rotation system.

At the rear end of the movement screw 30 a head 35 of a tie rod 38 (in dash lines) is positioned which extends inside the movement screw 30 to connect to the first coupling 20 integral with the plasticating screw 5. Between the rear end of the movement screw 30 and the head 35 of the tie rod 38, a thrust bearing 36 is inserted which allows a relative rotation between the movement screw 30 and the assembly of the first coupling 20 and the tie rod 38.

The operation of the injection assembly 1 is described below.

### Injection phase

During the injection phase, the plasticating screw 5 must be able to move forward to push the molten material towards the mould. For this purpose only the main motor 42 is operated, the rotor 41 of which turns in a clockwise direction (viewed from the right in the figure), causing rotation of the second coupling 40 which in turn rotates the movement screw 30 which is rigidly connected to it.

The nut screw 31 will tend to turn in the same direction as the movement screw 30, since it is made to rotate by the movement screw 30. Consequently the nut screw turns the reduction unit 33 and the motor shaft 39 until the anti-rotation system 34, fitted on the motor shaft 39, is blocked.

Once the nut screw 31 has been blocked, the movement screw 30 continues turning inside the nut screw 31 which remains still. Since the movement screw 30 has a righthand thread, it will move to the left (in the figure) pushing the first coupling 20 with the plasticating screw 5 through the bearing 50.

To ensure that the movement is completed, the stator 43 of the main electric motor must always be able to interact with its rotor 41, so also the stator 43 must be integral in forward movement with the movement screw 39 during its travel. For this purpose, the stator 43 is set into the casing 44 resting on the guide 70 which allows movement along the track 71. The guide 70 also makes it possible to have reaction torque that prevents rotation of the casing 44. During this phase, the anti-rotation system 60 is free to rotate and allows a relative rotating movement, through the thrust bearing 50, between the assembly formed by the rotor 41 and the movement screw 30 and the first coupling 20.

Since considerable axial loads are involved, the casing 44 could be caused to turn by the strong pressure that is created between the rotating elements and the races of the thrust bearing 50. To prevent all this from altering the progress of the injection phase, a system is provided which is able to provide a torque to contrast this tendency to rotate. The system acts directly on the coupling 20 through the anti-rotation device 80 which prevents rotation of the coupling 20 with respect to the casing 44.

In this way the torque, which may be transmitted by the rotation of the rotor 41, will be balanced by the reaction on the profiled guides 70. It should be noted that the anti-rotation system 80 is blocked when the anti-rotation device 60 is free in the case of forward movement and vice-versa, to allow the plastication phase. It is interesting to note how the direction of the torque transmitted by the bearing 50 to the coupling 20 is contrary to the direction of the reaction torque of the stator 43 and so, although the torques are discharged on the same structure, they will not increase the loads on the profiled guides 70.

Control of the injection speed is obtained by regulating the rotation speed of the main motor 42, by means of a suitable drive mechanism, not shown.

### Plastication phase

In the plastication phase the plasticating screw 5 must perform a rotary movement around its own axis. In this phase the plasticating screw 5 must be able to turn and travel at the same time, moving back gradually as the plastic material is accumulated at its front end. The plasticating screw 5 must guarantee a constant but adjustable pressure on the material, so as to be able to compact it.

The rotor 41 of the main motor 42 turns in a counter-clockwise direction (viewed from the right in the figure), that is its direction of rotation is inverted with respect to the injection phase. In this case the first coupling 20 and the second coupling 40 are kept integral thanks to the blocking of rotation by the free wheel 60. Consequently there is a single rotating body formed by the rotor 41, the couplings 20 and 40, the plasticating screw 5 and the movement screw 30. In this way the first coupling 20 transmits counter-clockwise rotation to the plasticating screw 5 and so the plastication phase begins.

Control of the travel of the plasticating screw 5 is obtained by regulating the nut screw 31 with the auxiliary motor 32. In this way the nut screw 31 will turn at a substantially different speed from the movement screw 30, generating on it the necessary movements to enable it to rotate with suitable backward movements.

A loop system is created, comparing the indicative pressure value of the plastic required by the process and the real value read by means of a pressure transducer placed on the injection chamber. This loop system is able to pilot the auxiliary motor 32 so that it maintains first a speed value of the nut screw 31 equal to that of the movement screw 30 to obtain an accumulation of material in the injection chamber (in this way the plasticating screw 5 does not move back) until the established pressure value is reached. After that moment the system must provide a relative speed between nut screw 31 and movement screw 30 so as to move back the movement screw in conformity with the pressure value reached by the action of the plasticating screw on the molten material.

This series of components interlocked with the nut screw also allow backward movement of the plasticating screw 5 which is achieved by blocking the nut screw 31 by means of the auxiliary motor 32 during rotation of the movement screw 30 (with the same direction as the plastication phase).

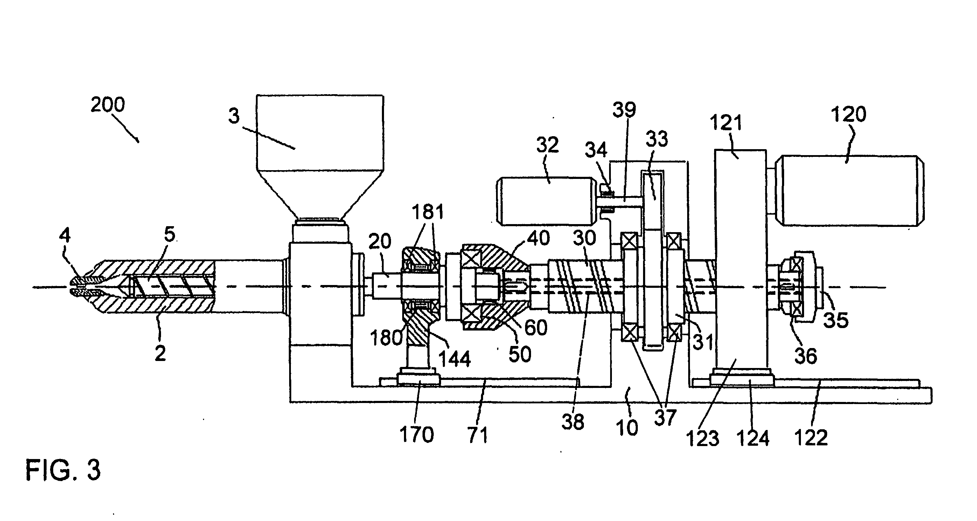

With reference to Fig. 3, a second embodiment of the invention is described in which elements the same as or corresponding to those already illustrated in the first embodiment are indicated with the same reference numbers and their description is omitted.

Fig. 3 shows an injection assembly 200 in which a constructional variation with respect to the first embodiment is the use of a conventional electric motor 120 as the main motor, with a reduction unit 121 for interlocking the movement screw 30.

As shown schematically in Fig. 3, the assembly has been modified in that the movement screw 30 is connected to the main motor 120 by means of the reduction unit 121. The motor 120 and the reduction unit 121 are integrated in a support structure 123 supported by a guide 124 which can slide horizontally on a track 122 integral with the machine chassis 10. In fact the reduction unit 121 has on its output shaft a fixed coupling with an end section of the movement screw 30 and the reduction unit 121 being slidably mounted on guide 124 can follow the engaging section of the screw 30 even during the movement thereof.

The connection between the plasticating screw 5 and the movement screw 30 is made by means of the first coupling 20 and the second coupling 40 interfaced by the thrust bearing 50 and by the anti-rotation system 60.

The first coupling 20 is supported by a support 144 with an interposed anti-rotation device 180 and thrust bearings 181. The support 144 is mounted on a guide 170 which can slide horizontally on the track 71 integral with the machine chassis 10. In this way the torque which may be transmitted by the bearing 5 will be balanced by the reaction of the guide 170.

## Claims

1. Injection assembly (1, 200) for injection presses for plastic materials, comprising:
- a plasticating screw (5) which performs a forward travelling movement during the plastic injection phase into a cavity of a mould, a rotary movement around its own axis and a rotary-travelling movement, comprising a rotation around its own axis and a retraction, during the plastication phase of the plastic material,
- movement means of the plasticating screw (5) comprising a movement screw (30) connected, by connecting means (40, 20), to said plasticating screw (5), and
- two electric motors (42; 120, 32) acting on said movement means for causing said travelling, rotary, and rotary-travelling movements of said plasticating screw (5), said two electric motors comprising a main motor (42; 120) and an auxiliary motor (32) for causing the rotary, travelling and rotary-travelling movements of the plasticating screw and for regulating the rotary-travelling movement of the plasticating screw,
said connecting means comprising
- a first coupling (20) integral with the plasticating screw (5), and
- a second coupling (40) integral with the movement screw (30),
said first and second couplings (20, 40) being connected to each other by means (60) which allow their mutual rotation in only one direction.
**characterised in that**
said first coupling (20) and said second coupling (40) have an interposed thrust bearing (50) and a free wheel or one-way clutch (60) which acts as an anti-rotation device to allow the relative rotation of one coupling with respect to the other in one direction and not in the opposite direction.

2. Injection assembly (1) according to claim 1, **characterised in that** said main motor (42) comprises a rotor (41) integrally fixed to said second coupling (40) and a stator (43) integral with a casing (44) supported by a guide (70) which slides on a track (71) integral with the fixed machine chassis (10).

3. Injection assembly (1) according to claim 2, **characterised in that** said casing (44) of the main motor (42) rotatably receives said first coupling (20) by means of interposed bearings (81) and a free wheel (80) which acts as an anti-rotation device, allowing the relative rotation of the first coupling (20) with respect to the casing (44) in one direction and not in the opposite direction.

4. Injection assembly (200) according to claim 1, **characterised in that** said main motor (120) comprises a reduction unit (121) equipped with a nut screw which engages with a section of said movement screw (30).

5. Injection assembly (200) according to claim 4, **characterised in that** said main motor (120) and said reduction unit (121) are supported by a structure (123) supported by a guide (124) which slides on a track (122) integral with the fixed machine chassis (10).

6. Injection assembly (200) according to claim 4 or 5, **characterised in that** it also comprises a support (144) rotatably fitted on said first coupling (20) by means of interposed bearings (181) and a free wheel (180) which acts as an anti-rotation device, said support (144) being supported by a guide (170) which slides on a track (71) integral with the fixed machine chassis (10).

7. Injection assembly (1, 200) according to any of the previous claims, **characterised in that** said auxiliary motor (32) comprises a reduction unit (33) which moves a nut screw (31) engaging in a section of said movement screw (30).

8. Injection assembly (1, 200) according to claim 7, **characterised in that** said reduction unit (33) is integrally fixed on said fixed machine chassis (10).

9. Injection assembly (1, 200) according to claim 7 or 8, **characterised in that** said auxiliary motor (32) comprises a motor shaft (39) connected to said unit (33) and that between said motor shaft (39) and said fixed machine chassis (10) a free wheel (34) is interposed which acts as an anti-rotation device, allowing the rotation of the motor shaft (39) in one direction and not in the opposite direction.

10. Injection assembly (1, 200) according to any of the previous claims, **characterised in that** tie rod means (38) are provided which connect said first coupling (20) to said movement screw (30) to pull said first coupling (20) during the retraction movement of said movement screw (30).

11. Injection assembly (1, 200) according to claim 10, **characterised in that** said tie rod means (38) extend axially inside of said movement screw (30) and have a head (35) positioned at the rear end of said movement screw (30), with after interposed bearings (36).

## Patentansprüche

1. Eine Einspritzgruppe (1, 200) für Kunststoff-Spritzgusspressen, die folgendes umfasst:
- eine Plastifizierungsschraube (5), die eine translatorische Vorschubbewegung während der Kunststoffeinspritzungs-Phase in eine Aushöhlung einer Form, eine Drehbewegung um ihre eigene Achse und eine translatorische Drehbewegung vollführt, einschließlich einer Drehung um ihre eigene Achse und eines Rücklaufs während der Plastifizierungsphase des Kunststoffmaterials,
- Bewegungselemente der Plastifizierungsschraube (5), die eine Bewegungsschraube (30) umfassen, die mit Hilfe von Verbindungsmitteln (40, 20) mit der genannten Plastifizierungsschraube (5) verbunden sind, und
- zwei Elektromotoren (42; 120; 32), die auf die genannten Bewegungsmittel einwirken, um die genannte translatorische, Dreh- und translatorische Drehbewegung der genannten Plastifizierungsschraube (5) zu veranlassen, wobei die genannten beiden Elektromotoren einen Hauptmotor (42, 120) und einen Hilfsmotor (32) zur Veranlassung der Drehbewegung, der translatorischen und translatorischen Drehbewegung der Plastifizierungsschraube und zur Regelung der translatorischen Drehbewegung der Plastifizierungsschraube umfassen,
und die genannten Verbindungselemente folgendes umfassen:
- eine erste Kupplung (20) , die einteilig mit der Plastifizierungsschraube (5) ist, und
- eine zweite Kupplung (40), die einteilig mit der Bewegungsschraube (30) ist,
wobei die genannte erste und zweite Kupplung (20, 40) miteinander durch Elemente (60) verbunden sind, die deren gegenseitige Bewegung in nur einer Richtung gestatten,
**dadurch gekennzeichnet, dass**
zwischen der genannten ersten Kupplung (20) und der genannten zweiten Kupplung (40) ein Drucklager (50) und ein Freilauf oder eine Einwegkupplung (60) liegen, die als Umdrehungshemmungs-Vorrichtung dient, um die entsprechende Drehung einer Kupplung im Verhältnis zur anderen in einer Richtung und nicht in der entgegen gesetzten zu gestatten.

2. Eine Einspritzgruppe (1) gemäß Anspruch 1, **dadurch gekennzeichnet, dass** der genannte Hauptmotor (42) einen Rotor (41) umfasst, der einteilig an der genannten zweiten Kupplung (40) befestigt ist und einen Stator (43), der einteilig mit einem Gehäuse (44) ist, das von einer Führung (70) gehalten wird, die über ein Gleis (71) gleitet, das einteilig mit dem festen Maschinengestell (10) ist.

3. Eine Einspritzgruppe (1) gemäß Anspruch 2, **dadurch gekennzeichnet, dass** das genannte Gehäuse (44) des Hauptmotors (42) die genannte erste Kupplung (20) mit Hilfe von dazwischen angeordneten Lagern (81) und einem Freilauf (80) drehbar aufnimmt, welcher als Umdrehungshemmungs-Vorrichtung dient, wobei die entsprechende Umdrehung der ersten Kupplung (20) im Verhältnis zum Gehäuse (44) in einer Richtung und nicht in der entgegen gesetzten gestattet wird.

4. Eine Einspritzgruppe (200) gemäß Anspruch 1, **dadurch gekennzeichnet, dass** der genannte Hauptmotor (120) eine Untersetzung (121) umfasst, die mit einem Muttergewinde ausgerüstet ist, das in einen Abschnitt der genannten Bewegungsschraube (30) eingreift.

5. Eine Einspritzgruppe (200) gemäß Anspruch 4, **dadurch gekennzeichnet, dass** der genannte Hauptmotor (120) und die genannte Untersetzung (121) durch eine Struktur (123) gestützt werden, die von einer Führung (124) gehalten wird, die über ein Gleis (122) gleitet, das einteilig mit dem festen Maschinengestell (10) ist.

6. Eine Einspritzgruppe (200) gemäß Anspruch 4 oder 5, **dadurch gekennzeichnet, dass** sie ebenfalls eine Halterung (144) umfasst, die drehbar auf die genannte erste Kupplung (20) mit Hilfe von dazwischen angeordneten Lagern (181) und einem Freilauf (180) montiert ist, der als Umdrehungshemmungs-Vorrichtung wirkt, wobei die genannte Halterung (144) durch eine Führung (70) getragen wird, die über ein Gleis (71) gleitet, das einteilig mit dem festen Maschinengestell (10) ist.

7. Eine Einspritzgruppe (1, 200) gemäß einem beliebigen der vorausgegangenen Ansprüche, **dadurch gekennzeichnet, dass** der genannte Hilfsmotor (32) eine Untersetzung (33) umfasst, die ein Muttergewinde bewegt, das in einen Abschnitt der genannten Bewegungsschraube (30) eingreift.

8. Eine Einspritzgruppe (1, 200) gemäß Anspruch 7, **dadurch gekennzeichnet, dass** die genannte Untersetzung (33) einteilig an dem genannten festen Maschinengestell (10) befestigt ist.

9. Eine Einspritzgruppe (1, 200) gemäß Anspruch 7 oder 8, **dadurch gekennzeichnet, dass** der genannte Hilfsmotor (32) eine Antriebswelle (39) umfasst, die mit der genannten Einheit (33) verbunden ist und dass zwischen der genannten Antriebswelle (39) und dem genannten festen Maschinengestell (10) ein Freilauf (34) liegt, der als Umdrehungshemmungs-Vorrichtung wirkt und die Umdrehung der Antriebswelle (39) in einer Richtung und nicht in der entgegen gesetzten gestattet.

10. Eine Einspritzgruppe (1, 200) gemäß einem beliebigen der vorausgegangenen Ansprüche, **dadurch gekennzeichnet, dass** Zugstangen (38) vorgesehen sind, die die genannte erste Kupplung (20) mit der genannten Bewegungsschraube (30) verbinden, um die genannte erste Kupplung (20) während der Rücklaufbewegung der genannten Bewegungsschraube (30) zu ziehen.

11. Eine Einspritzgruppe (1, 200) gemäß Anspruch 10, **dadurch gekennzeichnet, dass** die genannten Zugstangen (38) axial innerhalb der genannten Bewegungsschraube (30) verlaufen und einen Kopf (35) aufweisen, der sich am hinteren Ende der genannten Bewegungsschraube (30) befindet, nach vorherigem Zwischenschieben von Lagern (36).

## Revendications

1. Groupe à injection (1, 200) pour presses à injection de matières plastiques, comprenant :
- une vis de plastification (5) qui effectue un mouvement de translation en avant pendant la phase d'injection de la matière plastique dans une cavité d'un moule, un mouvement de rotation autour de son propre axe et un mouvement de translation-rotation, comprenant une rotation autour de son propre axe et une rétraction, pendant la phase de plastification de la matière plastique,
- des dispositifs de mouvement de la vis de plastification (5) comprenant une vis de mouvement (30) reliée, au moyen de dispositifs de raccord (40, 20), à ladite vis de plastification (5), et
- deux moteurs électriques (42 ; 120, 32) agissant sur lesdits dispositifs de mouvement pour provoquer lesdits mouvements de translation, de rotation et de translation-rotation de ladite vis de plastification (5), lesdits deux moteurs électriques comprenant un moteur principal (42 ; 120) et un moteur auxiliaire (32) pour provoquer les mouvements de translation, de rotation et de translation-rotation de ladite vis de plastification et pour réguler le mouvement de translation-rotation de la vis de plastification, lesdits dispositifs de raccord comprenant
- un premier raccord (20) faisant partie intégrante de la vis de plastification (5), et
- un deuxième raccord (40) faisant partie intégrante de la vis de mouvement (30),
lesdits premier et deuxième raccords (20, 40) étant reliés entre eux par des dispositifs (60) qui permettent leur rotation réciproque dans un sens seulement
**caractérisé en ce**
**qu'**un palier de butée (50) et une couronne libre ou un embrayage à un seul sens (60) agissant comme un dispositif anti-rotation pour permettre la rotation correspondante d'un raccord par rapport à l'autre dans un sens et pas dans le sens opposé sont interposés entre ledit premier raccord (20) et ledit deuxième raccord (40).

2. Groupe à injection (1) selon la revendication 1, **caractérisé en ce que** ledit moteur principal (42) comprend un rotor (41) fixé audit deuxième raccord (40) de façon à faire partie intégrante de celui-ci et un stator (43) faisant partie intégrante d'une carcasse (44) soutenue par une glissière (70) qui coulisse sur un rail (71) faisant partie intégrante du châssis (10) fixe de la machine.

3. Groupe à injection (1) selon la revendication 2, **caractérisé en ce que** ladite carcasse (44) du moteur principal (42) reçoit de façon rotative ledit premier raccord (20) au moyen de l'interposition de roulements (81) et une couronne libre (80) servant de dispositif anti-rotation, permettant la rotation correspondante du premier raccord (20) par rapport à la carcasse (44) dans un sens et pas dans le sens opposé.

4. Groupe à injection (200) selon la revendication 1, **caractérisé en ce que** ledit moteur principal (120) comprend un réducteur (121) pourvu d'une vis à écrou qui s'engage dans une section de ladite vis de mouvement (30).

5. Groupe à injection (200) selon la revendication 4, **caractérisé en ce que** ledit moteur principal (120) et ledit réducteur (121) sont soutenus par une structure (123) supportée par une glissière (124) qui coulisse sur un rail (122) faisant partie intégrante du châssis (10) fixe de la machine.

6. Groupe à injection (200) selon la revendication 4 ou 5, **caractérisé en ce qu'**il comprend également un support (144) monté de façon rotative sur ledit premier raccord (20) au moyen de l'interposition de roulements (181) et une couronne libre (180) agissant comme un dispositif anti-rotation, ledit support (144) étant soutenu par une glissière (170) qui coulisse sur un rail (71) faisant partie intégrante du châssis (10) fixe de la machine.

7. Groupe à injection (1, 200) selon une revendication quelconque parmi les revendications susmentionnées, **caractérisé en ce que** ledit moteur auxiliaire (32) comprend un réducteur (33) qui déplace une vis à écrou (31) s'engageant dans une section de ladite vis de mouvement (30).

8. Groupe à injection (1, 200) selon la revendication 7, **caractérisé en ce que** ledit réducteur (33) est monté sur le châssis (10) fixe de la machine de façon à faire partie intégrante de celui-ci.

9. Groupe à injection (1, 200) selon la revendication 7 ou 8, **caractérisé en ce que** ledit moteur auxiliaire (32) comprend un arbre moteur (39) relié audit réducteur (33) et **en ce qu'**une couronne libre (34) agissant comme un dispositif anti-rotation, permettant la rotation de l'arbre moteur (39) dans un sens et pas dans le sens opposé, est interposée entre ledit arbre moteur (39) et ledit châssis (10) fixe de la machine.

10. Groupe à injection (1, 200) selon une revendication quelconque parmi les revendications susmentionnées, **caractérisé en ce que** des dispositifs de barre d'accouplement (38) sont prévus, lesquels relient ledit premier raccord (20) à ladite vis de mouvement (30) pour tirer ledit premier raccord (20) pendant le mouvement de rétraction de ladite vis de mouvement (30).

11. Groupe à injection (1, 200) selon la revendication 10, **caractérisé en ce que** lesdits dispositifs de barre d'accouplement (38) s'étendent dans le sens axial à l'intérieur de ladite vis de mouvement (30) et possèdent une tête (35) placée au niveau de l'extrémité arrière de ladite vis de mouvement (30), après l'interposition de roulements (36).
